# FASCICULE DE BREVET EUROPEEN

(11) **EP 0 743 449 B1**
(45) Date de publication et mention de la délivrance du brevet: **20.03.2002**
(21) Numéro de dépôt: 95937087.5
(22) Date de dépôt: 24.11.1995
(51) Int. Cl.: F02M 71/02, F02B 53/10, F02M 59/46

(54) **MOTEUR DE COMBUSTION INTERNE POURVU D'UN SYSTEME D'INJECTION DIRECTE DE CARBURANT AVEC ASSISTANCE PAR AIR COMPRIME**
BRENNKRAFTMASCHINE MIT DIRECTER KRAFTSTOFFEINSPRITZVORRICHTUNG MIT DRUCHLUFTUNTERSTÜTZUNG
INTERNAL COMBUSTION ENGINE PROVIDED WITH A DIRECT FUEL INJECTION SYSTEM ASSISTED BY COMPRESSED AIR

(30) Priorité: 02.12.1994 FR 9414618
(43) Date de publication de la demande: 20.11.1996
(73) Titulaire: Luc, Philippe, 17246 Santa Christina d'Aro (ES)
(72) Inventeur: LUC, Philippe, E-17246 Santa Cristina d'Aro (ES); BENOIT, Philippe, E-17246 Santa Cristina d'Aro (ES)
(86) Numéro de dépôt international: ES9500139
(87) Numéro de publication internationale: WO9617168

(56) Documents cités:
- FR-A- 444 936
- US-A- 1 666 384
- US-A- 3 675 630
- US-A- 3 805 747
- US-A- 3 906 906
- US-A- 4 359 017

## Description

La présente invention est relative à un système particulier d'injection directe de carburant avec assistance pneumatique, applicable aux moteurs à combustion interne, principalement ceux à allumage commandé.

L'injection directe de carburant dans la chambre de combustion d'un moteur à allumage commandé vise des améliorations que l'on peut difficilement obtenir avec le mélange carburé externe; citons entre autres:
- La suppression du court-circuitage de mélange carburé frais à l'échappement au moment du transfert/balayage, dans les moteurs deux-temps.
- La suppression du court-circuitage de carburant a l'échappement, caractéristique des moteurs quatre-temps fortement croisés.
- La stratification du mélange air-carburant dans la chambre, afin d'optimiser la combustion et permettre à celle-ci de se dérouler en mélange pauvre.
- La régulation de la charge du moteur uniquement par variation du débit de carburant injecté, ce qui permet de supprimer la régulation par étranglement de l'admission, et donc les pertes par pompage caractéristiques des moteurs quatre-temps.
- De par la conjonction des points précédents, l'augmentation du rendement global, et réduction des émissions de substances polluantes, principalement à charge partielle.

Dans ce contexte, l'injection directe requiert un calage très précis du temps d'injection, et une forte atomisation du carburant, ce qui la rend plus complexe que la carburation externe.

On connaît plusieurs types d'injection directe pour application aux moteurs deux-temps, notamment:
- L'injection de carburant liquide sous haute pression,
- L'injection de carburant par assistance pneumatique.

Lorsqu'il y a une assistance pneumatique, l'air comprimé nécessaire peut être fourni par un compresseur auxiliaire alimentant des injecteurs placés directement sur la culasse, au dessus de chaque chambre de combustion, et qui injectent le carburant avec une certaine quantité d'air comprimé pour favoriser la répartition et l'atomisation dudit carburant.

Un exemple de ce système est décrit dans: "K.SCHLUNKE-The Orbital Combustion Process Engine - 10th Vienna Motor Symposium - VDI n 122, p.63-78".

Selon la publication SAE-941687, un mécanisme permet de piéger une petite quantité d'air issue de la compression dans la chambre de combustion, et est restituée pour l'assistance pneumatique au moment de l'injection de carburant.

Dans ces deux cas, le temps d'injection dans les chambres est déterminé par l'ouverture et la fermeture des injecteurs qui sont contrôlés électroniquement.

Le document USA 4,359,017 décrit un système à compresseur qui injecte le carburant dans une préchambre de combustion pour y être allumé avant la fin du temps de refoulement du compresseur.De cette façon il y a un pré-allumage de la charge de carburant à la façon des moteurs Diesel à injection indirecte. Le compresseur doit achever son temps de refoulement contre la pression de combustion au détriment du rendement du compresseur et par conséquent du moteur qui doit l'entrainer.

Le document US-A 1,666,384 décrit un sytème à compresseur dans lequel il y a aussi une préchambre qui permet d'accumuler à une pression donnée toute la charge necéssaire pour ensuite l'introduire dans la cylindre-moteur et bénéficier du refroidissement du à la détente du gaz. L'emploi d'un compresseur pour obtenir une pression élevée de la charge détériore le rendement du moteur et l'énergie nécessaire à la compression de la charge n'est pas récupérée par l'effet de refroidissement du à la détente de celui-ci dans la chambre de combustion du moteur. Le contrôle du temps d'admission est rélisé par l'emploi de soupapes commandées mécaniquement.

Selon les documents EP 296969, et US 4244255, une dérivation du carter-pompe permet dans un moteur deux temps d'envoyer une partie de la charge en air frais vers la culasse via une soupape commandée: la carburation a lieu au moyen d'un injecteur extérieur placé au dessus de la soupape. Dans ce cas, le temps d'injection est déterminé par le diagramme de levée de la soupape.

L'invention a pour but de fournir un système d'injection directe de carburant avec assistance pneumatique, réalisant avec l'air d'assistance pneumatique un mélange carburé au moyen d'un dispositif de carburation externe conventionnel, et n'exigeant ni soupape commandée, ni commande électronique pour son injection dans la chambre de combustion.

Conformément à l'invention, ce but est atteint dans un moteur comprenant un compresseur à un piston associé à chaque chambre de combustion, lequel aspire un mélange préalablement carburé et, par l'action de son temps de refoulement, injecte ce mélange directement à l'intérieur de ladite chambre un moment adéquatement déterminé par la mise en phase ou le calage dudit compresseur. Ce mélange vient s'ajouter à l'air aspiré par la chambre. Selon une particularité de l'invention, la soupape de refoulement du compresseur se trouve placée à l'intérieur de la chambre de combustion. L'invention présente les avantages suivants:
- Simplicité de mise en oeuvre, faible coût de revient grâce à la possibilité d'adapter directement des dispositifs de carburation employés pour la carburation externe (carburateur, injection mécanique ou électronique): ceux-ci seront placés à l'admission des compresseurs auxiliaires, tandis que l'admission du moteur sera généralement indépendante et non carburée.
- Grande plage de variation du moment d'injection, permettant d'optimiser le degré de stratification pour toutes les conditions de fonctionnement.
- Potentiel de vitesse du moteur élevé (par exemple 12.000 t/min), grâce d'une part à la carburation indépendante du temps d'injection, et d'autre part aux soupapes des compresseurs qui sont généralement des clapets autorisant des hautes fréquences d'ouverture/fermeture.
- Très haut degré d'atomisation du carburant, lorsque celui-ci est liquide, avec une vaporisation au moins partielle du fait de son réchauffage suite au passage à travers le compresseur avant d'être injecté dans la chambre.
- Possibilité d'augmenter la puissance proportionnellement a la fraction supplémentaire d'air apporté dans les chambres par les compresseurs.
- Possibilité de fonctionnement avec des carburants liquides ou gazeux.

L'invention est décrite ci-après à l'aide de plusieurs exemples d'application à différents types de moteurs, et selon plusieurs modes possibles de réalisation du mélange carburé, lesquels ne sont pas limitatifs des particularités de l'invention.

Dans tous les cas, la cylindrée du compresseur est petite par rapport au déplacement de la chambre de combustion, par exemple 10 à 20% de celle-ci pour l'injection d'essence, ce qui donne une quantité d'air d'assistance pneumatique suffisante pour obtenir une bonne atomisation de l'essence. Le rapport volumétrique du compresseur doit être aussi élevé que possible afin d'en optimiser le rendement.

Les FIGURES 1A, 1B, 1C, 1D sont des vues schématiques d'un moteur de type deux temps selon l'invention, muni d'un carburateur placé à l'admission du compresseur, représenté a des phases successives du fonctionnement.

La FIGURE 2 est un diagramme de mise en phase ou calage du compresseur par rapport à la chambre à laquelle il est associé, selon l'exemple des figures précédentes.

La FIGURE 3 est un diagramme pression-volume de la chambre de combustion et du compresseur qui lui est associé, lorsque ce dernier travaille à pleine ouverture (A), ou à ouverture partielle (B) de son conduit d'aspiration, selon l'exemple des FIGURES 1A à 1D.

Les FIGURES 4A, 4B, 4C, 4D, 4E, 4F sont des vues schématiques d'un moteur de type quatre temps selon l'invention, muni d'un injecteur de carburant à l'admission du compresseur, représenté à des phases successives du fonctionnement.

La FIGURE 5 est un diagramme du calage du compresseur par rapport à la chambre a laquelle il est associé, selon l'exemple des FIGURES 4A à 4F.

La FIGURE 6 représente un moteur selon l'invention, muni d'un carburateur particulier à l'aspiration du compresseur.

Les FIGURES 7A, 7B, 7C, 7D sont des vues schématiques d'un moteur à piston rotatif de type Wankel, selon l'invention, à des phases successives de fonctionnement.

Les FIGURES 8 et 9 représentent deux systèmes simples permettant de retarder ou commander l'ouverture du clapet de refoulement dans la chambre de combustion.

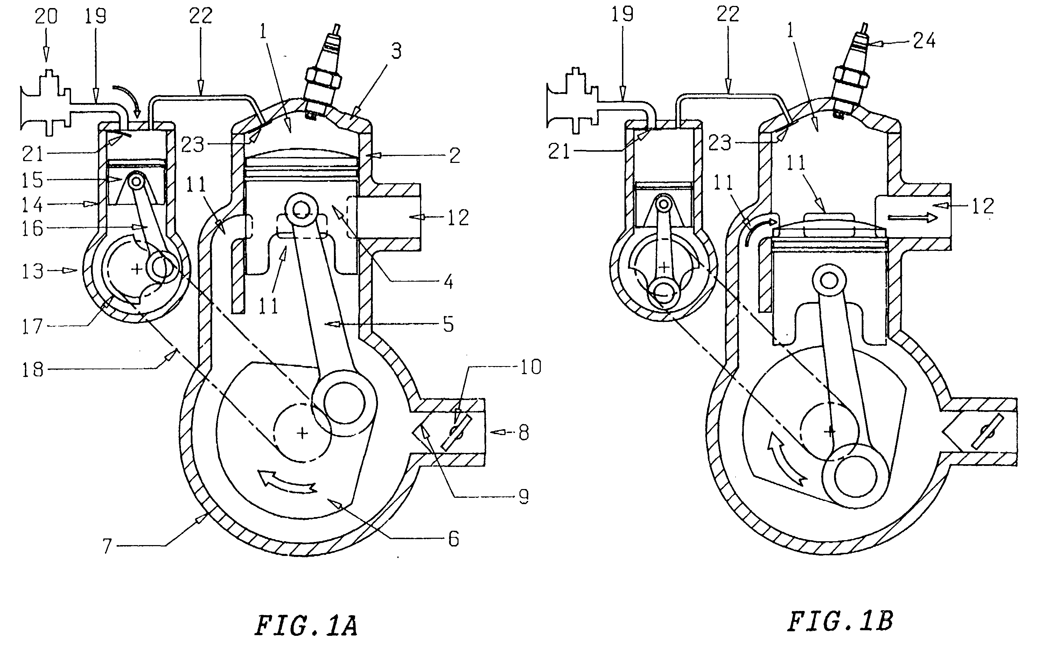

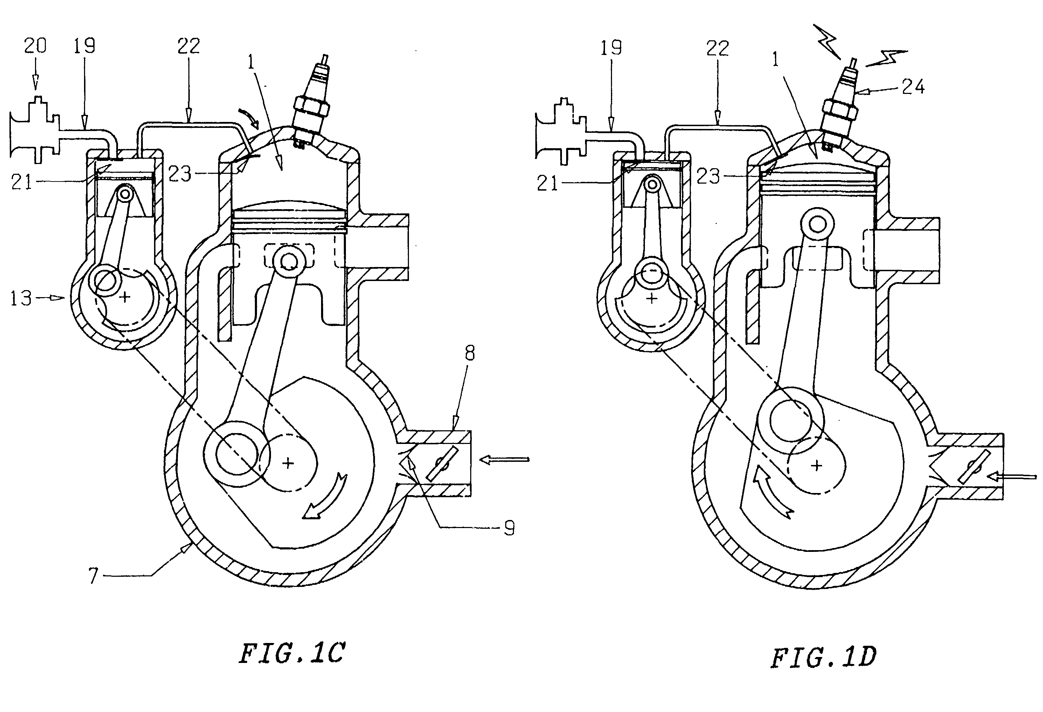

Les FIGURES 1A, 1B, 1C, 1D représentent schématiquement un moteur de type deux temps à carter-pompe selon l'invention, avec la chambre de combustion (1), délimitée par le cylindre (2), par la culasse (3), et par le piston (4) qui se déplace avec un mouvement alternatif et actionne par l'intermédiaire d'une bielle (5) un vilebrequin (6) qui tourne à l'intérieur d'un carter (7).
Le carter (7) est pourvu d'un orifice d'admission d'air (8) muni de clapets (9), et d'un papillon (10). Des lumières de transfert (11) mettent en communication le carter (7) avec la chambre de combustion (1), tandis qu'une lumière d'échappement (12) détermine une ouverture de la chambre à l'atmosphère.
Le compresseur (13) comporte un cylindre (14), un piston (15), avec sa bielle (16), actionnés par un vilebrequin (17) qui est entraîné par le vilebrequin (6) du moteur au moyen d'une transmission par chaîne (18), selon un rapport 1:1. Le compresseur possède un conduit d'aspiration (19), pourvu d'un carburateur (20), et d'un clapet d'admission (21) situé à l'intérieur de la chambre du compresseur, ainsi qu'un conduit de refoulement (22), muni d'un clapet anti-retour (23) à son extrémité débouchant dans la chambre de combustion.

Dans la FIGURE 1A, selon le sens de rotation indiqué par la flèche, le moteur est à son temps de détente, tandis que l'air contenu dans le carter-pompe est comprimé, les clapets (9) étant fermés. Simultanément, le compresseur aspire un mélange air-carburant à travers le carburateur (20) et le conduit (19), le clapet (23) étant fermé du fait de la pression régnant dans la chambre de combustion, le clapet (21) étant ouvert de par la dépression régnant dans la chambre du compresseur.

Dans la FIGURE 1B le moteur est au temps d'échappement des gaz brûlés, par la lumière (12) et de transfert par les lumières (11) de l'air frais en provenance du carter, tandis que le compresseur termine son temps d'aspiration, les clapets (21) et (23) étant fermés.

Dans la FIGURE 1C le moteur est à son temps de compression dans la chambre (1), et d'admission d'air dans le carter (7), le compresseur (13) commence à comprimer le mélange frais. Du fait du rapport volumétrique très élevé du compresseur, et d'une légère avance sur le piston du moteur, la pression dans la chambre du compresseur est supérieure à celle de la chambre du moteur (1) pendant toute la durée du temps de compression de ce dernier, ce qui provoque le refoulement progressif du mélange par le conduit (22), et son injection dans la chambre (1) suite à l'ouverture du clapet (23).

Dans la FIGURE 1D le piston du moteur se trouve peu avant son point mort haut, au moment où l'allumage se produit au moyen de la bougie (24), tandis que le piston (15) du compresseur est à son point mort haut, ayant donc terminé le refoulement du mélange dans la chambre de combustion. Le clapet (23) se referme, la combustion commence dans la chambre (1), et le cycle continue selon la FIGURE 1A.

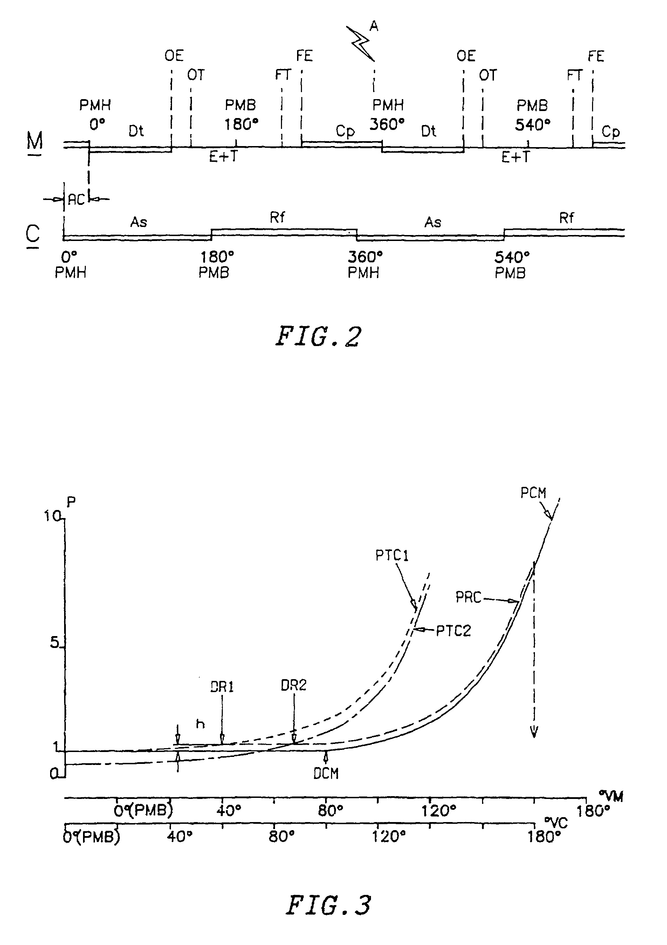

La FIGURE 2 donne le diagramme de calage du compresseur selon l'exemple représenté dans les FIGURES 1A à 1D.
M = calage du moteur en degrés de vilebrequin.
C = calage du compresseur.
PMH = point mort haut.
PMB = point mort bas.
Dt = détente moteur; Cp = compression moteur.
E+T= échappement et transfert moteur; A = allumage
As = aspiration compresseur.
Rf = refoulement compresseur.
OE = ouverture échappement; FE = fermeture échappement.
OT = ouverture transfert; FT = fermeture transfert.
AC = avance du compresseur par rapport au moteur.
L'avance AC est destinée à obtenir une pression supérieure dans le compresseur pour permettre le refoulement dès le début de la compression, et le terminer avant l'allumage.

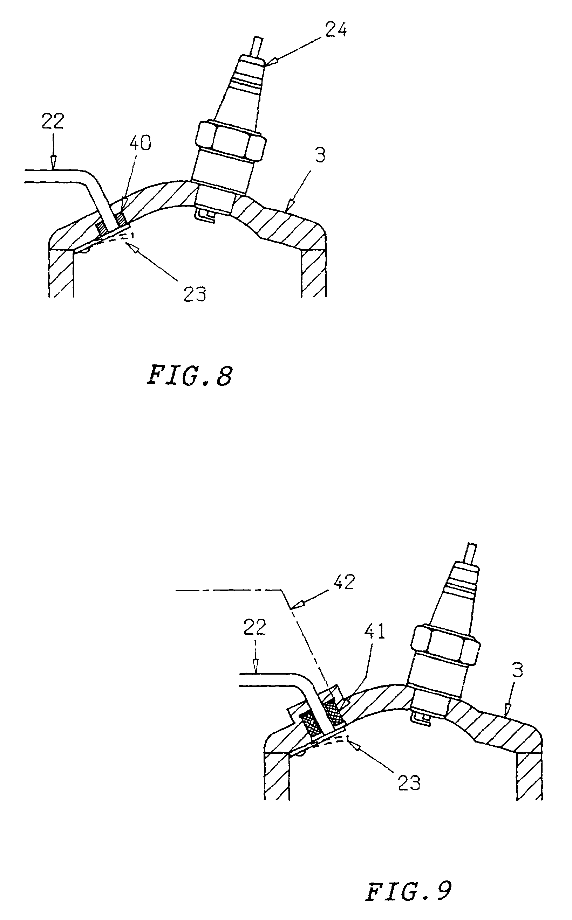

La FIGURE 3 représente une simulation de l'évolution des pressions dans la chambre et dans le compresseur en fonction des degrés de vilebrequin du moteur ( VM), et du compresseur ( VC), selon l'exemple des FIGURES 1A à 1D.
PCM = courbe de pression dans la chambre du moteur.
DCM = début de compression dans la chambre du moteur.
Lorsque le compresseur travaille à pleine ouverture du carburateur (20), la pression d'aspiration est égale à la pression atmosphérique, et la courbe de compression théorique (sans refoulement) du compresseur est PTC1. Compte tenu de la perte de charge h à travers le conduit (22) et le clapet de refoulement (23) du compresseur, le début du refoulement dans la chambre de combustion a lieu au point DR1, et la courbe de compression réelle du compresseur est PRC.
A ouverture partielle du papillon du carburateur, la pression d'aspiration est inférieure à la pression atmosphérique, et la courbe de compression théorique du compresseur est PTC2: la quantité de mélange carburé injecté est diminuée, et le début de refoulement est retardé jusqu'au point DR2, ce qui augmente la stratification dans la chambre.
Par ailleurs, la perte de charge h peut être choisie d'après une pression plus ou moins grande du clapet de refoulement (23), ou par des particularités dudit clapet décrites dans les FIGURES 8 et 9, ce qui détermine la position de DR1 et DR2.

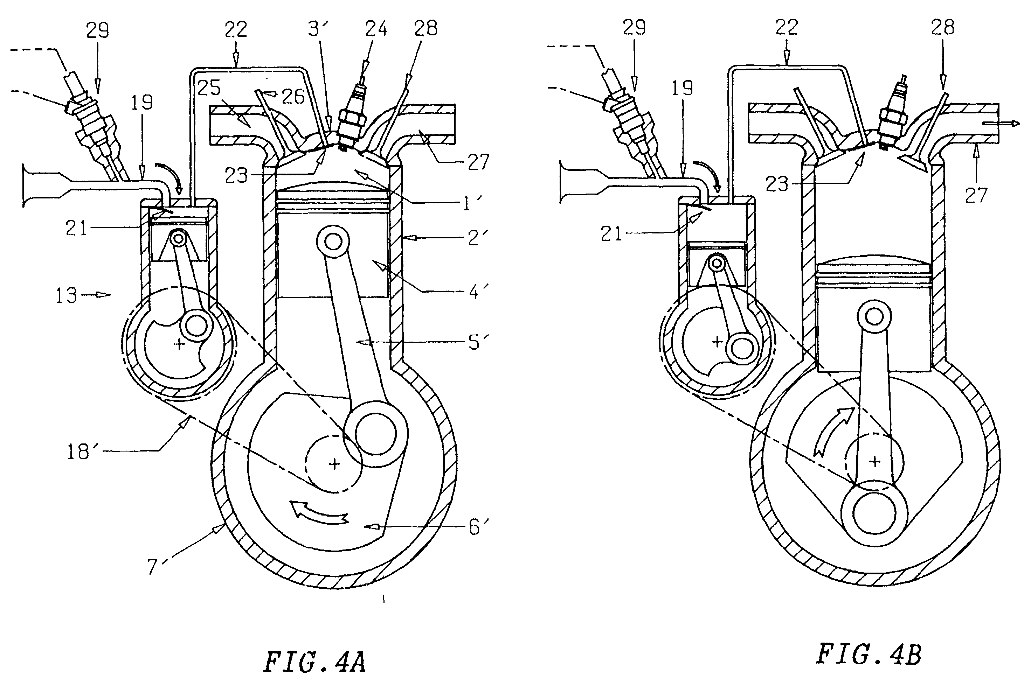

Les FIGURES 4A à 4F schématisent un moteur 4 temps selon l'invention, comportant la chambre de combustion (1'), le cylindre (2'), le piston (4') qui actionne le vilebrequin (6') par l'intermédiaire d'une bielle (5'); le carter (7'); la culasse (3') comportant un conduit d'admission (25) avec une soupape (26), un conduit d'échappement (27) avec une soupape (28), et une bougie d'allumage (24). Le compresseur auxiliaire (13), identique à celui de la figure 1A, est entraîné par la chaîne (18') de façon à tourner à la moitié de la vitesse du moteur. Le conduit d'aspiration (19) possède à titre d'exemple une alimentation en carburant par un injecteur à commande électromagnétique (29). Le compresseur travaille toujours à pleine aspiration d'air, et la charge du moteur est ici réglée par le débit d'essence de l'injecteur. Le conduit de refoulement (22) du compresseur (13) est pourvu du clapet (23) son extrémité débouchant dans la chambre (1').

Dans la FIGURE 4A, suivant le sens de rotation indiqué par la flèche, le piston du moteur (4') est à son temps de détente, tandis que le compresseur débute l'aspiration de mélange carburé par le conduit (19), avec le clapet (21) ouvert, et le clapet (23) fermé.

Dans la figure 4B, le moteur a terminé le temps de détente et débute l'échappement des gaz brûlés a travers le conduit (27), suite à l'ouverture de la soupape (28); le compresseur continue l'aspiration de mélange.

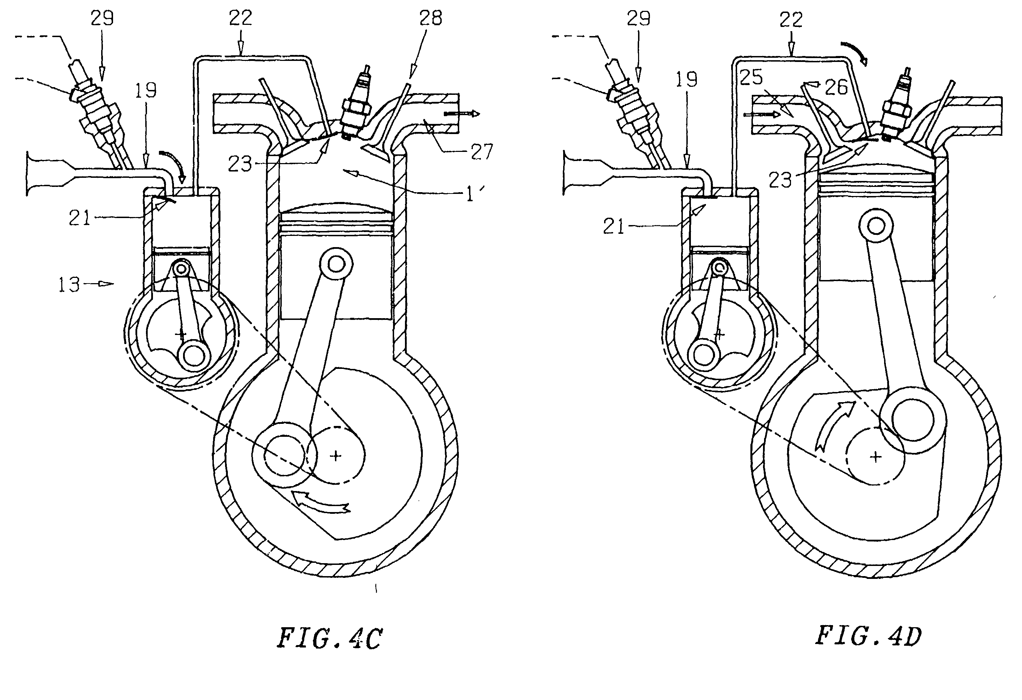

Dans la FIGURE 4C l'échappement se poursuit dans le moteur, ainsi que l'aspiration de mélange frais dans le compresseur.

Dans la FIGURE 4D, le moteur débute sa course d'admission d'air par le conduit (25) avec la soupape (26) ouverte et la soupape (28) fermée; tandis que le compresseur commence le refoulement de mélange frais dans la chambre par le conduit (22), avec le clapet (21) fermé et le clapet (23) ouvert.

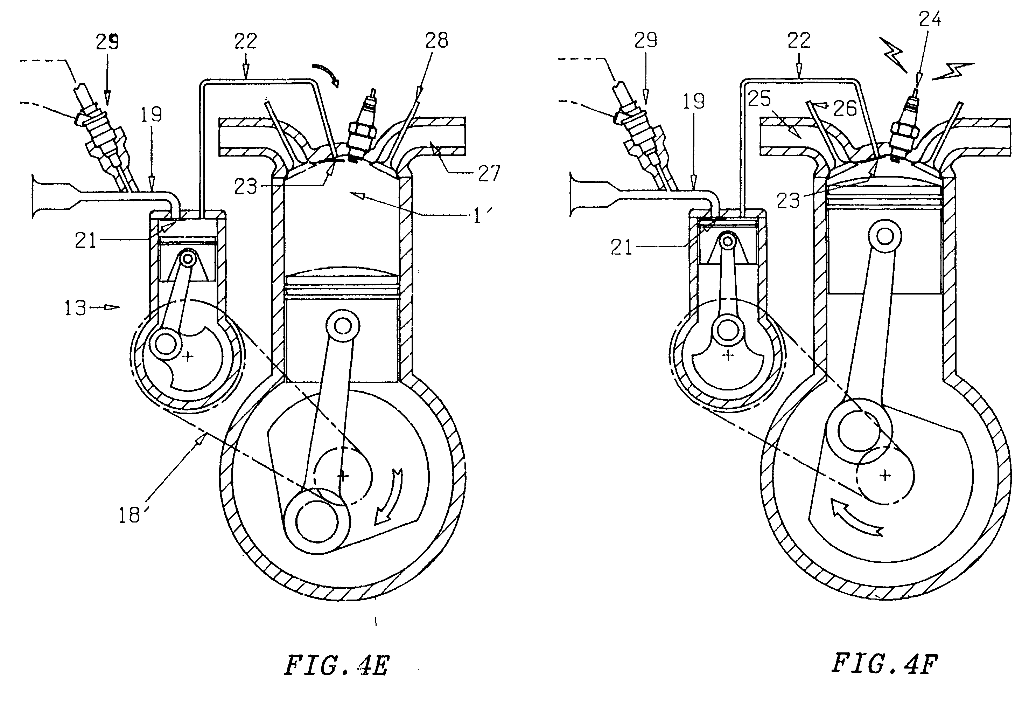

Dans la FIGURE 4E le moteur termine l'admission, la soupape (26) est fermée, et le compresseur continue sa course de refoulement pendant la course de compression du moteur.

Dans la FIGURE 4F le compresseur qui est à son point mort haut termine son temps de refoulement, le clapet (23) se ferme, tandis que l'allumage a lieu dans la chambre du moteur par la bougie (24). Le cycle continue ensuite selon la FIGURE 4A.

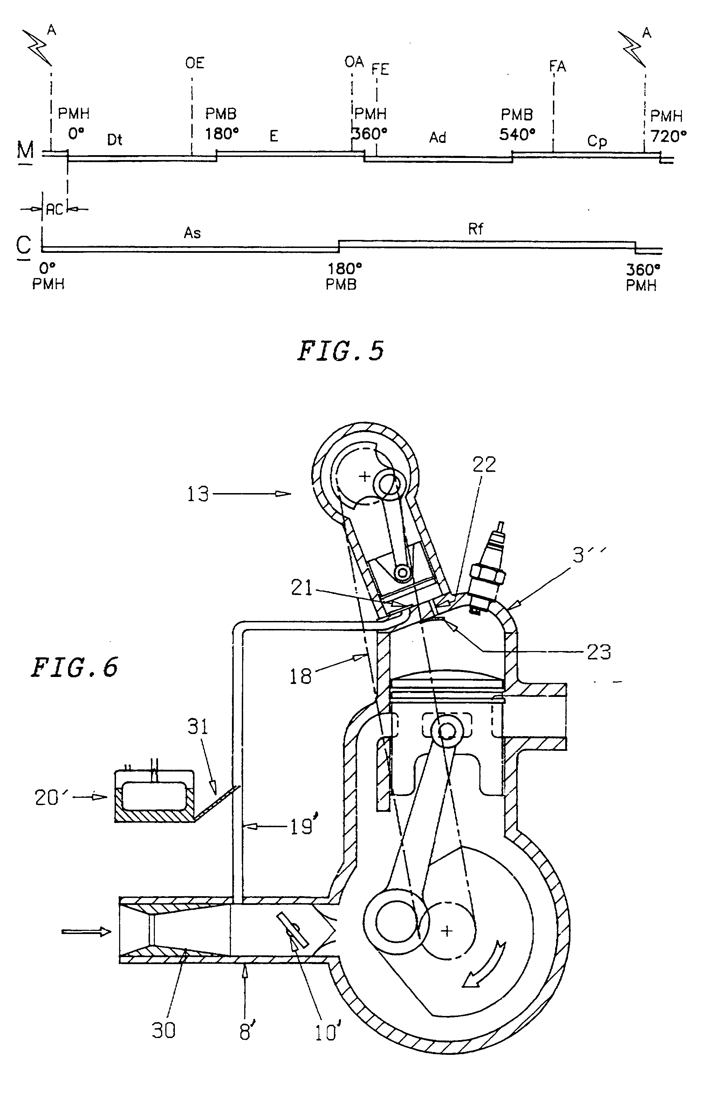

La FIGURE 5 donne le diagramme de calage du compresseur selon l'exemple représenté dans les figures 4A à 4F.
M = calage du moteur en degrés de vilebrequin.
C = calage du compresseur en degrés de son vilebrequin.
PMH = point mort haut; PMB = point mort bas.
Dt = détente moteur; E = échappement moteur.
OE/FE = ouverture/fermeture échappement moteur.
OA/FA = ouverture/fermeture admission moteur.
Ad = admission moteur; Cp = compression moteur.
A = allumage.
As = aspiration compresseur; Rf = refoulement compresseur.
AC = avance du compresseur par rapport au moteur.

La FIGURE 6 représente un moteur selon l'invention dans lequel le compresseur d'injection pneumatique (13) est identique à celui de la FIGURE 1A, mais est placé en position retournée sur la culasse (3''), afin de minimiser la longueur du conduit de refoulement (22), et obtenir de la sorte un rapport volumétrique maximal du compresseur, par exemple supérieur à 50:1.
Par ailleurs, la carburation y est réalisée selon une variante propre à l'invention: le conduit d'admission (8) du moteur est pourvu d'un venturi (30) et d'un papillon (10); le conduit d'aspiration (19) du compresseur (13) est connecté au conduit d'admission (8) du moteur entre le venturi (30) et le papillon (10), de sorte que l'air débité à travers le venturi alimente a la fois l'admission du moteur et l'admission du compresseur; il en résulte une même valeur de dépression dans les conduits (8) et (19). Un carburateur (20') alimente en carburant le conduit (19) au moyen du diffuseur (31). La charge du moteur est réglée par le papillon (10), le débit de carburant étant réglé par la dépression due au venturi (30). Par ce principe de fonctionnement, on obtient un dosage plus précis du carburant en fonction de la charge.

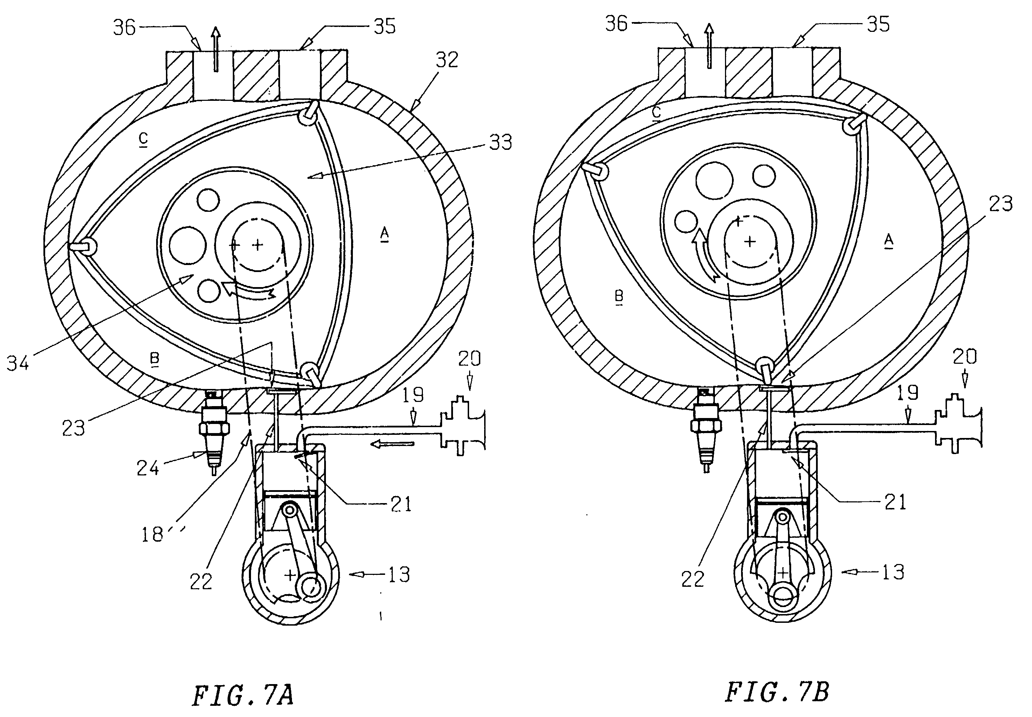

Les FIGURES 7A à 7D schématisent le fonctionnement de l'invention appliquée à un moteur rotatif de type Wankel.
Celui-ci comporte l'enveloppe trochoidale (32), le rotor (33) monté sur le vilebrequin (34). Le tout constitue trois chambres tournantes (A,B,C), réalisant tour à tour des cycles de 4 temps, d'admission par la lumière (35), compression, détente, échappement par la lumière (36). Chaque temps a une durée de 270 degrés de rotation du vilebrequin. ou 90 degrés de rotation du rotor.
Le compresseur auxiliaire (13), identique à celui des FIGURES 1 et 4, est entraîné par le moteur au moyen de la courroie crantée (18''), selon un rapport 1:1. Un carburateur (20) assure le débit d'essence. Le compresseur (13) est connecté à la chambre du moteur par son conduit (22) de refoulement, dans une zone comprise entre le début du temps d'admission, et le début du temps de détente, soit au niveau de l'enveloppe trochoïdale (32), soit au niveau d'une des parois latérales (le fond des chambres (A,B,C) dans l'illustration). Dans l'exemple, le conduit (22) débouche au niveau de l'enveloppe (32), et le clapet de refoulement (23) est placé sur la paroi intérieure de ladite enveloppe (32).

Dans la FIGURE 7A, selon le sens de rotation indiqué par la flèche, la chambre (A) termine son temps d'admission par la lumière (35), la chambre (B) est à son temps de détente, et la chambre (C) effectue un échappement par la lumière (36). Le compresseur dont le conduit de refoulement (22) se trouve vis-à-vis de la chambre (B), est à son temps d'aspiration de mélange carburé par le conduit (19), avec le clapet (21) ouvert et le clapet (23) fermé.

Dans la FIGURE 7B, le compresseur (13) est au point mort bas, et termine donc l'admission; à ce moment, du fait de rotation du rotor, c'est la chambre (A), débutant un temps de compression, qui se trouve maintenant vis-à-vis du conduit de refoulement (22).

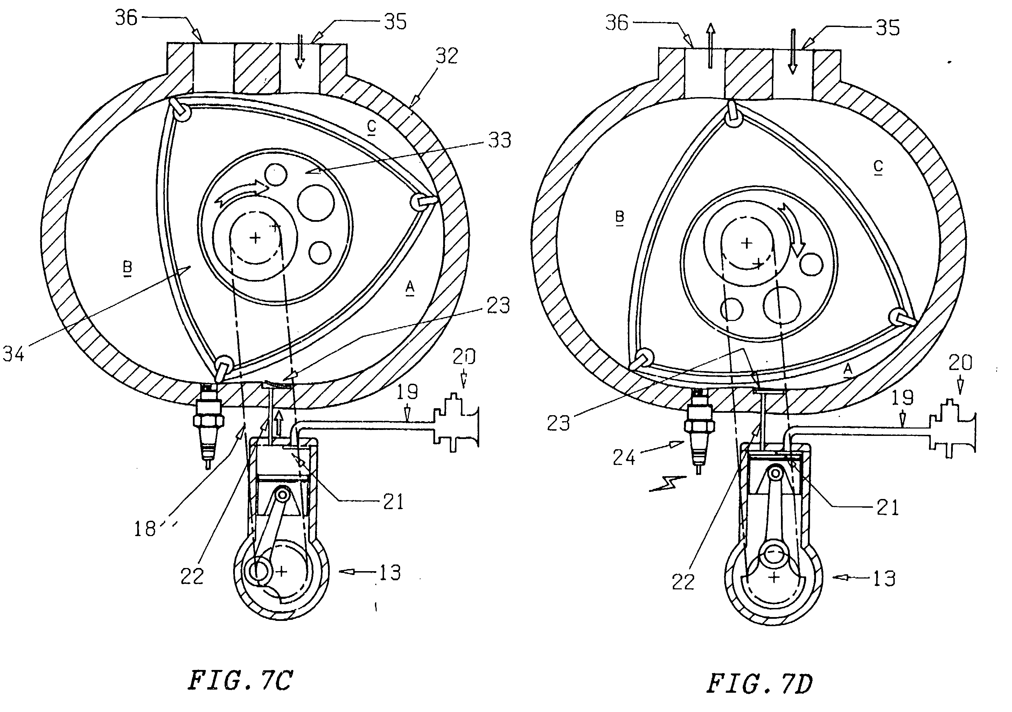

Dans la FIGURE 7C, le compresseur refoule le mélange dans la chambre (A) avec le clapet (23) ouvert. La chambre (B) est en fin de détente et la chambre (C), en début d'admission.

Dans la FIGURE 7D, le compresseur est au point mort haut, le refoulement est terminé, l'allumage a lieu dans la chambre (A), l'échappement dans la chambre (B), et l'admission dans la chambre (C). En suivant la rotation, le compresseur (13) alimentera ensuite la chambre (C) puis la chambre (B).

La FIGURE 8 montre un dispositif permettant de retarder le début d'injection du mélange carburé débité par le compresseur. Ce dispositif est constitué par un aimant permanent (40) rapporté dans la culasse (3) du moteur, et placé au niveau du siège du clapet de refoulement (23). lequel est constitué d'un matériau attiré par l'aimant.
En position fermée, le clapet (23) est plaqué sur son siège avec une force constante déterminée par le choix de l'aimant. Au temps de refoulement du compresseur, la pression dans le conduit (22) doit vaincre cette force supplémentaire appliquée au clapet (23), ce qui retarde l'ouverture de ce dernier et rend la durée d'injection inférieure au temps de refoulement du compresseur. On peut de la sorte retarder le début de l'injection dans un moteur 2 temps pour supprimer tout risque de court-circuitage de mélange carburé vers l'échappement.
En outre, du fait de la pression d'injection supérieure, l'atomisation et la répartition du carburant dans la chambre est améliorée.

La FIGURE 9 est une variante de la FIGURE 8, où l'on a remplacé l'aimant permanent par un électro-aimant (41), alimenté en courant par le câble (42). Une commande électronique du courant d'excitation permet de déterminer avec précision le moment d'ouverture, et éventuellement de fermeture du clapet en fonction de paramètres, tels que la vitesse du moteur, sa charge, sa température.

Selon un particularité supplémentaire de l'invention, les compresseurs peuvent être entraînés par un mécanisme à calage variable (non illustré), similaire à ceux déja connus sur les moteurs à 4 temps, et destinés à faire varier le calage de leur distribution.
Un de ces mécanismes appliqué à l'invention permet de varier les moments du début et de fin d'injection du mélange carbure par le compresseur (13), et peut être associé aux mécanismes illustrés par les FIGURES 8 et 9, afin d'optimiser le fonctionnement du moteur.

D'autre éléments non illustrés peuvent compléter l'invention, notamment le réchauffage de l'air aspiré par le compresseur pour permettre une meilleure vaporisation du carburant, par exemple avec une résistance électrique placée dans le conduit d'aspiration du compresseur ou par un échangeur prélevant la chaleur des gaz d'échappement, ou par le recyclage direct d'une fraction des gaz d'échappement vers le compresseur.

D'autres applications de l'invention, non représentées, sont par exemple celles où le carburant est un gaz. Dans ce cas, on y adaptera les systèmes de carburation appropriés.

## Revendications

1. Un moteur à combustion interne à une ou plusieurs chambres de combustion (1,1') auquelles est associé un compresseur (13) de type à un piston (15) dont la cylindrée est nettement inférieure au déplacement volumétrique de ladite chambre (1;1'), chaque compresseur (13) aspire par un conduit (19) un mélange carburé et par l'action de chacun des temps de refoulement du compresseur(13) injecte ledit mélange carburé directement dans ladite chambre de combustion (1;1') par l'intermédiaire d'un conduit de refoulement (22) sans préchambre de combustion équipé d'une unique soupape de refoulement (23) dudit compresseur (13) placée à l'extrémité dudit conduit de refoulement et à l'intérieur de ladite chambre de combustion (1;1'), le villebrequin (7) de chaque compresseur (13) est entrainé par le villebrequin (6;6') du moteur au moyen d'une transmission (18;18') de façon à maintenir un rapport de la vitesse de rotation dudit compresseur (13) constant relativement à la vitesse de rotation dudit arbre-moteur ainsi qu'une mise en phase faisant coincider chaque temps de refoulement dudit compresseur (13) avec un moment adéquatement déterminé du cycle de la chambre de combustion (1;1') à laquelle il est associé, ledit compresseur (13) constituant un système particulier d'injection pneumatique de carburant.

2. Un moteur selon la revendication 1, **caractérisé en ce que** lesdites soupapes de refoulement (23) sont constituées par des clapets non commandés, dont l'ouverture est provoquée par une pression dans le conduit de refoulement (22) supérieure à la pression régnant dans la chambre de combustion (1;1'), et la fermeture est provoquée par une pression de gaz dans la chambre de combustion (1;1') supérieure à celle régnant dans le conduit de refoulement (22) et par la force de rappel dudit clapet (23).

3. Un moteur selon la revendication 1 ou la revendication 2, **caractérisé en ce que** la mise en phase de chacun desoits compresseurs (13) est réglée de façon à ce que sa course de refoulement s'achève au plus tard lorsque l'allumage a lieu dans la chambre (1;1') à laquelle il est associé.

4. Un moteur selon l'une quelconque des revendications précédentes, **caractérisé en ce que** la soupape de refoulement (23) de chacun desdits compresseurs (13), est constituée par un clapet (23) sur le siège duquel est rapporté un aimant (40) exerçant une force d'attraction sur ledit clapet (23).

5. Un moteur selon la revendication 4, **caractérisé en ce que** ledit aimant (40) est remplacé par un solénoïde (41).

6. Un moteur selon l'une quelconque des revendications précédentes, **caractérisé en ce que** le mécanisme d'entraînement (18,18',18'') de chacun des compresseurs (13) est doté d'un dispositif permettant de faire varier la mise en phase dudit compresseur (13) avec la chambre de combustion (1;1';A,B,C) à laquelle il est associé.

7. Un moteur selon l'une quelconque des revendications précédentes, pourvu d'un ou de plusieurs carburateurs chacun desdits carburateurs étant constitué par un venturi (30) situé dans un conduit d'admission (8) du moteur, un papillon ou une vanne (10) situés dans ledit conduit d'admission (8) du moteur, un conduit d'admission (19) du compresseur (13) connecté audit conduit d'admission (8) du moteur, dans une zone comprise entre le venturi (30) et le papillon (10), et un dispositif (20',31) débitant le carburant dans le conduit d'admission (19) du compresseur (13).

## Patentansprüche

1. Eine Brennkraftmaschine mit interner Verbrennung mit einer oder mehreren Verbrennungskammern, mit einer slchen Ausbildung, dass jeder Verbrennungskammer (1,1') ein Kompressor (13) des Typs einer Kolbenpumpe(15) zugeordnet ist und dessen Hubraum wesentlich geringer ist als die volumetrische Verschiebung der besagten Kammer (1,1'), dass jeder Kompressor (13) durch eine Saugleitung (19) ein Kraftstof-Gemmischansaugt, und der, durch das Arbeitsspiel jeder der Stauchungen des Kompressors (13), das besagte Kraftstoff-Gemisch direkt in die besagte Verbrennungskammer (1,1') einspritz, mittels eines Druckrohres (22) ohne eine vorkammer, ausgerüstet mit einer einzigen auspuffklappe des besagten kompressor (13) befindet sich am Ende des besagten Druckrohres (22) und im Innern der besagten Verbrennungskammer (1,1') so dass jede Kurbwelle (17) eines jeden Kompressors (13) durch die Kurbwelle (6,6') der Brennkraftmaschine mittels eines Treibriemens (18,18') um das Geschwindigkeitsverhältnis der Rotation des besagten Kompressors 813) konstant zu halten, im Verhältnis zur Rotationsgeschwindikeit der besagten Brennkraftmaschinen-Antriebswelle (6,6'), mit einer solchen Einstellung, dass jede Stauchung des gennannten Kompressors (13) mit einem genau bestimmten Moment des Zyklusses der verbrennungskammer (1,1'), an die er angeschlossen ist, übereinstimmt, der besagte Kompressor (13) ist augebildet mit einer besonderen Kraftoffeinspritzvorrichtung mit Druckluft-Antrieb-Hilfe.

2. Eine Brennkraftmaschine die dem Anspruch 1 gemäss, **dadurch gekennzeichnet ist, dass** die besagten Pumpenauslassventile (23) mit mechanischen Klappen ausgebildet sind, deren Öffnung durch den Druck, der in dem Druckrohr (22) herrscht und der höher ist, als der Druck der in der Verbrennungskammer (1,1') herrscht, erzielt werden, und der Verschluss wird durch den Gasdruck der in der Verbrennungskammer (1,1') herrscht, und der höher ist als der in dem Druckrohr (22)und die Rückschlagkraft der genannten Klappe (23) hervorgerufen.

3. Eine Brennkraftmaschine die dem Anspruch 1 oder dem Anspruch 2 gemäss, **dadurch gekennzeichnet ist, dass** die Einstellung eines jeden der besagten Kompressor (13) so gerelt ist, dass die Stauchung spätestens dann beendet ist wnn die Zündung in der Kammer (1,1'), an dier er angeschlossen ist, stattfindet.

4. Eine Brennkraftmmaschine gemäss einem beliebigen der vorangegangenen Ansprüche, **gekennzeichnet dadurch, dass** das Pumpenauslassventil (23) eines jeden der besagten Kompressoren (13), mit einer Klappe (23) versehen ist, ausgebildet mit einem Klappensitz aud dem ein Magnet (30) angebracht ist und der eine bestimmte Anziehungskraft auf die besagte Klappe 823) ausübt.

5. Eine Bennkraftmaschine dem Anspruch 4 gemäss, **gekennzeichnet dadurch, dass** der besagte Magnet (40) durch einen Elektromagneten (Solenoiden) (41) ersetzt werden kann.

6. Eine Brennkraftmmaschine gemäss einem beliebigen der vorangegangenen Ansprüche, gekennzeichnet mit einer solchen Ausbildung, dass der Antriebmechanismus (18,18',18") eines jeden der Kompressoren (13) es erlaubt, die Einstellung des besagten Kompressors (134) im Verhältnis zur Verbrennungskammer (1,1';A,B,C) an die er angeschlossen ist, zu variieren.

7. Eine Brennkraftmaschine gemäss einem beliebigen der vorangegangenen Ansprüche, versehen mit einemm oder mehreren Vergasern, wobei jeder der besagten vergaser mit einem Venturi (30) ausgebildet ist, der sich in der Einlaufleitung (8) der Brennkraftmaschine befindet, mit einer Drosselklappe oder eimem Schieber (10) innerhalb der besagten Einlaufleitung (8) der Brennkraftmaschine, einer Ansaugleitung (19) des Kompressors (13) der an die besagte Einlaufleitung (8) der Brennkraftmaschien angeschlossen ist, in einem Bereich liegend zwischen dem Venturi 830) und der Drosselklappe (10), und einer Ausbildung (20',31) die den Durchatz des Kraftoffes in die Einlaufleitung (19) des Kompressors (13) gewährleistet.

## Claims

1. An internal combustion engine with one or more combustion chambers, **characterized in that** to each combustion chamber (1,1') is associated a single piston (15) type compressor (13) with a displacement distinctly lower than the displacement of said chamber (1,1'), **in that** each compressor (13) sucks via an intake pipe (19) an air-fuel mixture, and by the action of each of the delivery strokes of said compressor (13) injects the air-fuel mixture directly into said combustion chamber (1,1') through a delivery pipe (22) without any pre-chamber of combustion, provided with a single delivery valve of the compressor placed at the end of said delivery pipe (22) and inside said combustion chamber (1,1'), **in that** the crankshaft (17) of each compressor (13) is driven by the crankshaft (6,6') of the engine via a transmission (18,18') in order to maintain a constant ratio between the rotation speed of said compressor (13) and the rotation speed of said crankshaft (6,6'), as well as a timing that adjusts each delivery stroke of said compressor (13) with a moment adequately determined of the cycle of the combustion chamber (1,1') to which it is associated to, said compressor (13) forming a special system of air-assisted fuel injection.

2. An engine according to claim 1, **characterized in that** said delivery valves (23) are non-operated valves, as the opening is caused by the pressure in the delivery pipe (22) which is higher than the pressure prevailing in the combustion chamber (1,1'), and the closing is caused by a gas pressure in the combustion chamber (1,1') higher than the one prevailing in the delivery pipe (22) and the drawback force of said valves (23).

3. An engine according to claim 1 or 2, **characterized in that** the timing of each of said compressors (13) is tuned in a way that its delivery strokes ends at the latest when ignition takes place in the chamber (1,1') to which it is associated.

4. An engine according to anyone of the preceding claims, **characterized in that** the delivery valve (23) of each of said compressors (13) comprises a magnet fitted on the valve seat (23) and acting on said valve with an attractive force.

5. An engine according to claim 4, **characterized in that** said magnet (40) is a solenoid-type magnet (41).

6. An engine according to anyone of the preceding claims, **characterized in that** the transmission (18,18',18") for each compressor (13) is fitted with a device allowing to vary the timing of said compressor (13) in relation with the combustion chamber (1,1',A,B.C) to which it is associated.

7. An engine according to anyone of the preceding claims, provided with one or more carburetors **characterized in that** each of said carburetors is formed by a venturi (30) situated in an intake duct (8) of the engine, a throttle valve (10) situated in said intake duct (8) of the engine, an intake duct (19) of the compressor (13) connected to said intake duct (8) of the engine, in an area between the venturi (30) and the throttle valve (10), and a device (20',31) that delivers and vaporizes the fuel into the intake duct(19) of the compressor (13).
